(19) Europäisches Patentamt
European Patent Office
Office européen des brevets

(11) **EP 2 169 562 A1**

(12) **EUROPEAN PATENT APPLICATION**

(43) Date of publication:
**31.03.2010 Bulletin 2010/13**

(51) Int Cl.:
***G06F 17/27*** (2006.01)

(21) Application number: **08253188.0**

(22) Date of filing: **30.09.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **BRITISH TELECOMMUNICATIONS public limited company**<br>**London**<br>**EC1A 7AJ (GB)** | (72) Inventor: **The designation of the inventor has not yet been filed**<br><br>(74) Representative: **Geffen, Nigel Paul**<br>**BT Group Legal**<br>**Intellectual Property Department**<br>**PP C5A, BT Centre**<br>**81 Newgate Street**<br>**London**<br>**EC1A 7AJ (GB)** |

(54) **Partial parsing method, based on calculation of string membership in a fuzzy grammar fragment**

(57) Methods and corresponding apparatus for analysing text in a document comprising a plurality of textual units, the method comprising: receiving the document; partitioning the text into sequences of textual units; comparing sequences from the document with pre-determined sequences from a sequence store; determining similarity measures dependent on differences between sequences from the document and sequences from the sequence store, the similarity measures being dependent on how many unit operations are required in order to make the sequences from the document the same as the sequences from the sequence store, updating a results store in respect of sequences having similarity measures indicative of degrees of similarity above a pre-determined threshold; and providing an output document comprising tags indicative of such similarities.

Figure 1

**Description**

**Technical Field**

The present invention relates to text analysis. More specifically, aspects of the present invention relate to computer-implemented methods and apparatus for analysing text in a document, and to computer-implemented methods and apparatus for updating a store of sequences of textual units being electronically stored for use in methods such as the above.

**Background to the Invention and Prior Art**

It is widely recognised that the information explosion is one of the most pressing problems facing the computing world at the moment. It has been estimated that the amount of new information stored on paper, film, magnetic and optical media increased by approximately 30% per annum in the period 1999-2002 (see reference [1] below). Since then, it appears that the amount has continued to rise at a similar rate. The problem of information exploitation is fundamental to the successful use of the world's information resources, and the emerging field of text mining aims to assist in the automation of this process.

Text mining differs from information retrieval, in that the aim of an information retrieval system is to find documents relevant to a query (or set of terms). It is assumed that the "answer" to a query is contained in one or more documents; the information retrieval process prioritises the documents according to an estimate of document relevance.

The aim of text mining is to discover new, useful and previously unknown information automatically from a set of text documents or records. This may involve trends and patterns across documents, new connections between documents, or selected and/or changed content from the text sources.

A natural first step in a text mining process is to tag individual words and short sections where there is a degree of local structure, prior to an intelligent processing phase. This step can involve tagging the whole document in a variety of ways - for example:

- Part of Speech (PoS) Tagging: This is based on identification of each word's role in the sentence (noun, verb, adjective etc.) according to its context and a dictionary of known words and grammatically allowed combinations. Clearly this depends on a sophisticated general grammar and a good dictionary, and labels the whole of every sentence rather than simply identifying word sequences that may be of interest. See for example Brill [2]

- A Full Parse: This is based on a more sophisticated language model that recognises natural language grammar as well as domain-specific structures. This is currently beyond the range of automatic systems and requires human input, although work involving machine learning is ongoing - see reference [3] below.

- Probabilistic Models e.g. Hidden Markov Models (HMM), stochastic context free grammars as discussed in references [4] or [5] (p542)

Alternatively it can be restricted to simpler pattern matching operations, where small fragments of text are tagged. For example, one might take a medical report and identify diseases, drugs, company names, currency amounts, etc. leaving the remainder of the text untagged.

If we regard a text document as a sequence of symbols (or textual units), the aim of the segmentation process is generally to label sub-sequences of symbols with different tags (i.e. attributes) of a specified schema. These attributes correspond to the fragment identifiers or tags. For example, we could have a schema for postal addresses which includes attributes such as a number, a street name, town or city, and post code. The segmentation and tagging process involves finding examples of numbers, street names etc. that are sufficiently close to each other in the document to be recognisable as an address. Similarly, catalogue entries might have product name, manufacturer, product code, price and a short description. It is convenient to define a schema and to label sequences of symbols with XML tags, although this is clearly only one of many possible representations.

The main difficulty with segmentation of natural language text is that the information is designed to be read by humans, who are able to extract the relevant attributes even when the information is not presented in a completely uniform fashion. There is often no fixed structure, and attributes may be omitted or appear in different relative positions. Further problems arise from mis-spellings, use of abbreviations etc. Hence it is not possible to define simple patterns (such as regular expressions) which can reliably identify the information structure. The present inventors have identified various possible advantages in making use of fuzzy methods which allow approximately correct grammars to be used, and a degree of support to be calculated in respect of a matching process between an approximate grammar and a sequence of symbols that may not precisely conform to the grammar.

EP 2 169 562 A1

Prior Art

Comparing two sequences of symbols is a fundamental problem in many areas of computer science, and appears in applications such as determining the difference between text files, computing alignments between strings and gene sequences, etc. It can be solved in O(nm) time using dynamic programming approaches, although more efficient algorithms exist, as described in Chang and Marr [6] where a lower bound on complexity is given.

Standard methods of measuring the difference between two sequences include the "Levenshtein distance", which counts the number of insertions, deletions and substitutions necessary to make two sequences the same - for example, the sequence (*Saturday*) can be converted to (*Sunday*) by 3 operations: deleting *a*, deleting *t* and substituting n for *r*. An extension, the "Damerau edit distance", also includes transposition of adjacent elements as a fundamental operation. Note that the term "fuzzy string matching" is sometimes used to mean "approximate string matching", and does not necessarily have any connection to formal fuzzy set theory. Two recent papers on string matching that do involve fuzzy approaches are (i) Astrain et al [7] in which fuzzy finite state automata are used to measure a distance between strings, and (ii) Nasser et al [8] where a fuzzy combination of various string distance metrics is used to indicate the strength of match (alignment) between two strings.

In contrast to string matching, parsing is the process of determining whether a sequence of symbols conforms to a particular pattern specified by a grammar. Clearly in a formalised grammar such as a programming language, parsing is not a matter of degree - a sequence of symbols is either a valid program or it is not - but in natural language and free text there is the possibility that a sequence of symbols may 'nearly' satisfy a grammar. Crisp parsing has been extensively studied and algorithms are summarised in standard texts (e.g. Aho and Ullman, 1972: "Theory of Parsing, Translation and Compiling", Prentice Hall).

Fuzzy parsing can be seen as an extension of sequence matching, in which (a) we allow one sequence to be defined by a grammar, so that the matching process is far more complex, and (b) we allow the standard edit operations (insert, delete, substitute) on the string in order to make it conform to the grammar.

It should be noted that this is completely different to probabilistic parsing, which annotates each grammar rule with a probability and computes an overall probability for the (exact) parse of a given sequence of symbols. Such probabilities can be used to choose between multiple possible parses of a sequence of symbols; each of these parses is exact. This is useful in (for example) speech recognition where it is necessary to identify the most likely parse of a sentence. Here, we are concerned with sequences that may not (formally) parse, but which are close to sequences that do parse. The degree of closeness is interpreted as a fuzzy membership.

We note also that Koppler [9] described a system that he called a "fuzzy parser" which only worked on a subset of the strings in a language, rather than on the whole language. This is used to search for sub-sequences (e.g. all public data or all class definitions in a program). This is not related to the present field, however.

One of the most efficient parsing methods is the Cocke-Younger-Kasami (CYK) algorithm (also known as CKY) which uses a dynamic programming approach, and has a worst-case complexity of $O(n^3)$ where $n$ is the length of the string to be parsed. If $r$ is the number of rules in the grammar, the algorithm uses a 3-dimensional matrix $P[i, j, k]$ where $1 \leq i, j \leq n$ and $1 \leq k \leq r$ and the matrix element $P[i,j,k]$ is set to true if the substring of length $j$ starting from position $i$ can be generated from the $k$th grammar rule.

By initially considering substrings of length 1, then 2, 3, etc., all possible parses are considered. For substrings of length greater than 1, the algorithm automatically considers every possible way of splitting the substring into n parts, where $n>1$ and checks to see if there is some production $P \rightarrow Q1\ Q2\ ...\ Qn$ such that $Q1$ matches the first part, $Q2$ matches the second, etc. The dynamic programming approach ensures that these sub-problems are already solved, so that it is relatively simple to determine that $P$ matches the whole substring. Once this process is completed, the sentence is recognized by the grammar if the substring containing the entire string is matched by the start symbol.

References

[1] P. Lyman and H. R. Varian: "How Much Information (2003)", 2003.

[2] E. Brill: "Transformation-Based Error-Driven Learning and Natural Language Processing: A Case Study in Part-of-Speech Tagging" Computational Linguistics, vol. 21, pp. 543-566, 1995.

[3] H. van Halteren, J. Zavrel and W. Daelemans: "Improving Accuracy in Word Class Tagging through the Combination of Machine Learning Systems" Computational Linguistics, vol. 27, pp. 199-230, 2001.

[4] C. D. Manning and H. Schutze: "Foundations of Statistical Natural Language Processing", Cambridge, MA: MIT Press, 1999.

[5] G. F. Luger and W. A. Stubblefield: "Artificial Intelligence", Reading, MA: Addison Wesley, 1998.

[6] W. I. Chang and T. G. Marr: "Approximate String Matching and Local Similarity", Lecture Notes in Computer Science, pp. 259, 1994.

[7] J. J. Astrain, J. R. Gonzalez de Mendivil and J. R. Garitagoitia: "Fuzzy automata with e-moves compute fuzzy measures between strings", Fuzzy Sets and Systems, vol. 157, pp. 1550-1559, 2006.

[8] S. Nasser, G. Vert, M. Nicolescu and A. Murray: "Multiple Sequence Alignment using Fuzzy Logic" presented at IEEE Symposium on Computational Intelligence in Bioinformatics and Computational Biology, Honolulu, HI, pp. 304-311, 2007.

[9] R. Koppler: "A Systematic Approach to Fuzzy Parsing", Software Practice and Experience, vol. 27, pp. 637-650, 1997.

It will be understood from the above that approaches described in the prior art either compute an approximate degree of match between two fixed strings or require an exact correspondence between a pattern and a string.

## Summary of the Invention

According to a first aspect of the present invention, there is provided a computer-implemented method of analysing text in a document, said document comprising a plurality of textual units, said method comprising:

receiving said document;
partitioning the text in said document into sequences of textual units from the text in said document, each sequence having a plurality of textual units;
for each of a plurality of sequences of textual units from said document:

(i) comparing said sequence from said document with at least one of a plurality of pre-determined sequences stored in a sequence store;
(ii) in respect of each of said plurality of sequences from said sequence store, determining, according to a predetermined matching function, a similarity measure dependent on differences between said sequence from said document and said sequence from said sequence store, said similarity measure being dependent on how many unit operations are required in order to make the sequence from said document the same as the sequence from said sequence store, the unit operations being selected from a predetermined set of operations, and in the event that said similarity measure is indicative of a degree of similarity above a pre-determined threshold between said sequence from said document and said sequence from said sequence store, updating a results store with an identifier identifying the sequence from said document and with a tag indicative of said sequence from said sequence store;

providing an output document comprising, for each sequence of textual units from said document in respect of which at least one sequence from said sequence store has a similarity measure indicative of a degree of similarity above a pre-determined threshold, a tag indicative of said at least one sequence from said sequence store.
According to a second aspect of the present invention, there is provided a computer-implemented method of updating a sequence store, said sequence store comprising a plurality of pre-determined sequences of textual units being electronically stored for use in a computer-implemented process of analysing text in a document, said text analysis process comprising: comparing at least one sequence of textual units from said document with at least one of a plurality of pre-determined sequences stored in said sequence store; determining a similarity measure dependent on differences between said sequence from said document and said sequence from said sequence store, and in the event that said similarity measure is indicative of a degree of similarity above a pre-determined threshold between said sequence from said document and said sequence from said sequence store, updating a results store with an identifier identifying the sequence from said document and with a tag indicative of said sequence from said sequence store; said updating method comprising:

receiving an indication of an existing sequence in said sequence store, said existing sequence comprising a plurality of textual units;

receiving an indication of a candidate sequence, said candidate sequence comprising a plurality of textual units;

determining, by comparing individual textual units of the existing sequence with individual textual units of the candidate sequence, one or more unit operations required in order to convert the existing sequence into a potential replacement sequence which, when used in performing said text analysis process in respect of a document, would ensure that any sequence from said document that would result in a similarity measure indicative of a degree of similarity above a pre-determined threshold between said sequence from said document and said existing sequence would also result in a similarity measure indicative of a degree of similarity above a pre-determined threshold between said sequence from said document and said potential replacement sequence, the one or more unit operations being selected from a predetermined set of operations;

determining, in dependence on the one or more unit operations required in order to convert said existing sequence into said potential replacement sequence, a cost measure indicative of the degree of dissimilarity between said existing sequence and said potential replacement sequence; and

updating the sequence store by replacing said existing sequence with said potential replacement sequence in the event that said cost measure is indicative of a degree of dissimilarity below a predetermined threshold.

Preferred embodiments of the invention may be thought of as allowing for text analysis to be achieved using an adaptation of the CYK algorithm in order to allow for:

- approximate grammars that can contain fuzzy sets of terminal symbols
- partial parsing, measured by the proportion of a string that has to be altered by Levenshtein-style operations (or other similar types of operations) in order to make it conform to the grammar.

Furthermore, preferred embodiments of the invention may be thought of as allowing for comparison of the ranges of two approximate grammars (i.e. the sets of strings that can be regarded as "fuzzily" conforming to each grammar) without further explicit parsing of any strings. This may enable a determination as to whether grammar definitions overlap significantly, or whether one grammar definition completely subsumes another by parsing a superset of strings.

## Brief Description of the Drawings

Preferred embodiments of the present invention will now be described with reference to the appended drawings, in which:

Figure 1 is a schematic diagram illustrating the tagging process;

Figure 2 is a flow-chart illustrating fuzzy parsing: how tags may be added and how the text analytics database may be updated;

Figure 3 shows a detail of the tagging process for a string;

Figure 4 shows how the grammar-grammar conversion cost may be calculated;

Figure 5 illustrates how a grammar-grammar cost table may be created; and

Figure 6 categorises four possible types of outcome that may result from performing an updating method according to the second aspect.

## Description of Preferred Embodiments of the Invention

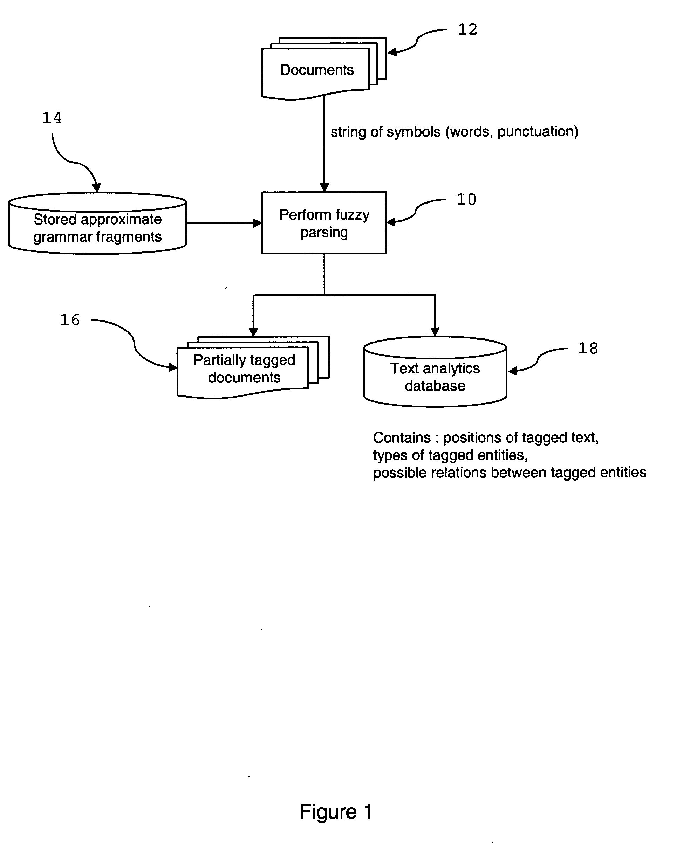

With reference to Figures 1 to 6, methods and apparatus for analysing text and for updating a store of sequences of textual units being electronically stored for use in methods such as the above according to preferred embodiments will be described.

Embodiments according to two related aspects will be described. The first aspect, which will be described with reference mainly to figures 1, 2 and 3, relates in general to enabling efficient identification of segments of natural language text which approximately conform to one or more patterns specified by fuzzy grammar fragments. Typically these may be used to find small portions of text such as addresses, names of products, named entities such as organisations, people or locations, and phrases indicating relations between these items.

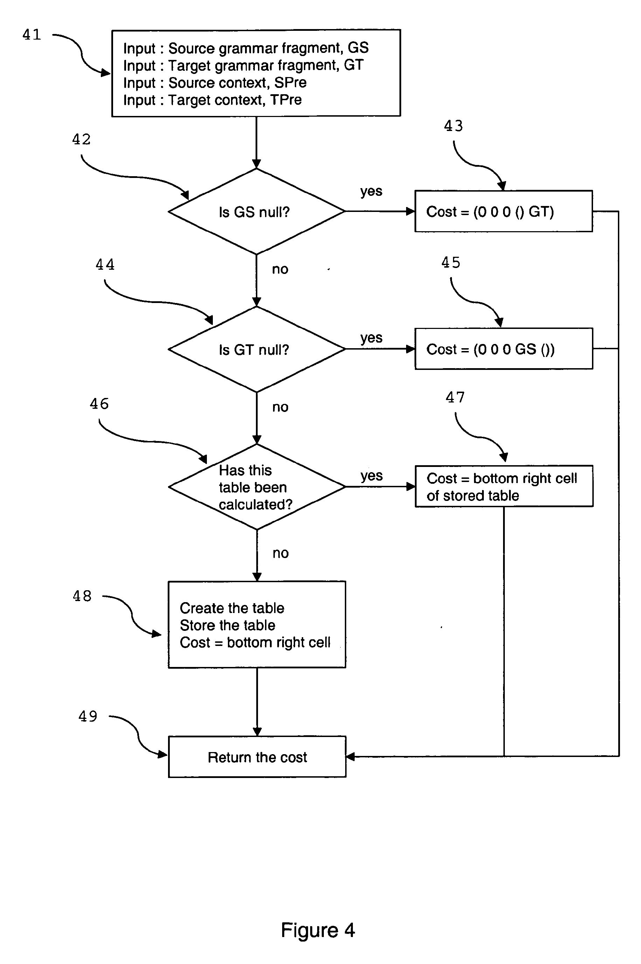

The second aspect, which will be described with reference mainly to figures 4, 5 and 6, relates in general to enabling comparisons to be made of the effectiveness or usefulness of two different sets of fuzzy grammar fragments that are candidates for use in this process. This aspect may be of use in assessing the effect of changes proposed by a human expert without there being any need to re-process an entire set of documents and examine the tagged outputs for differences.

**Strings**

In order to identify the segments within a document, we assume that a tokeniser is available to extract the symbols from the document. The tokeniser may be of a known type, and is merely intended to split the document into a sequence of symbols recognisable to the fuzzy grammars. The set of (terminal) symbols:

$$T = \{t_1, t_2, \ldots, t_n\}$$

represents the words (and possibly punctuation) appearing in the set of documents to be tagged. In the text below, we will refer to strings which are sequences of terminal symbols (for example phrases, sentences, etc).
A string S could be

$$S = t_1 \; t_2 \ldots t_m$$

which could alternatively be written as

$$S = t_1 \wedge t_2 \wedge \ldots \wedge t_m$$

where the concatenation operator ^ simply indicates that the symbols appear in a sequence. It is normally omitted.
Additionally, we define the null string such that

$$S = S \wedge null = null \wedge S$$

**Approximate Grammar Fragments**

Backus-Naur Form (BNF) is a metasyntax used to express context-free grammars: that is, a formal way to describe formal languages. We use a modification of the standard BNF notation to define approximate grammar fragments as shown below. The grammar fragments (which are sometimes referred to simply as "grammars") are approximate because they can contain fuzzy sets of terminal symbols.
A grammar fragment may be defined by

- *T*- a finite set of terminal symbols e.g. {*1, 2, 3, ..., High, Main, London, ..., Street, St, Road, Rd, ..., January, Jan, February, ...* }

- *F*- a finite set of fragment tags, e.g. {*<address>, <date>, <number>, <streetEnding>, <placeName>, <postcode>, <dayNumber>, <dayName>, <monthName>, <monthNumber>, <yearNumber>, ...* }

- $TS = \{TS_1 \ldots TS_n\}$ - fuzzy subsets of *T*, such that $TS_i \neq TS_j$ unless *i=j*. There is a partial order on *TS*, defined by the usual fuzzy set inclusion operator. These sets may be defined by intension (i.e. a procedure or rule that returns the membership of the element in the set) or by extension (i.e. explicitly listing the elements and their memberships); where they are defined by intension, an associated set of "typical" elements is used to determine subsethood etc. The typical elements of a set *TSi* should include elements that are in $TS_i$ but not in other sets $TS_j$, where *j≠i*

- *R* - a set of grammar rules of the form $H_i ::= B_i$ with $H_i \in F$ where each $B_i$ is a grammar fragment such that $B_i = G_{i1}$

$^\wedge G_{i2} ^\wedge \dots ^\wedge G_{in_i}$
and each $G_{ij}$ is a grammar element, i.e.
either $G_{ij} \in F$
or $G_{ij} \in TS$
or $G_{ij} \in T$

Additionally each $G_{ij}$ may be enclosed in brackets $[G_{ij}]$ to denote that it is optional in a grammar fragment.

There is exactly one rule of the form $H_i ::= TS_i$ for each terminal set $TS_i$.

We refer to rules as compound grammar elements and symbols or fuzzy subsets as atomic grammar elements. Each sequence of grammar elements (such as a rule body) has a minimum length, defined as follows:

$$minLength(G_1 {}^\wedge G_2 {}^\wedge \dots {}^\wedge G_n) = \sum_{i=1}^{n} minLength(G_i)$$

$minLength([X])=0$
$minLength(t_i)=1$
$minLength(TS_i)=1$

$$minLength(F) = \min_{F::=B_i \in R} \left( minLength(B_i) \right)$$

where $X$ is an arbitrary grammar element, $t_i \in T$, and $TS_i \in TS$

The maximum length is defined in a corresponding manner. Finally, to prevent recursive or mutually recursive grammar rules, we require a strict (but not total) order defined over $F$ and denoted by $\subset$, such that

Hi $\subset$ Hj if and only if Hj ::= Bj is a grammar rule and
either Bj contains (or optionally contains) Hi
or Bj contains (or optionally contains) a tag Hk and Hi $\subset$ Hk

Note that the ordering is
irreflexive i.e. Hi $\not\subset$ Hi for all i, and
asymmetric, so that if Hi $\subset$ Hj then Hj $\not\subset$ Hi.

**Example 1**

```
For example, let R = {
        <domesticAddress> ::= <buildingID> <placeName>
        <buildingID> ::= <number> [<numberSuffix>] <streetName> <streetEnding>
        <buildingID> ::= <houseName> <streetName> <streetEnding>
        <number> ::= {1, 2, 3, ...}
        <numberSuffix> ::= {a/1, b/1, c/1, d/1, e/0.8, f/0.6, g/0.2}
        <houseName> ::= <anyWord> <houseSuffix>
        <houseSuffix> ::= {Cottage, House, Lodge, Manor, Villa, Mansion, Palace}
        <streetName> ::= {High, Main, Station, London, Norwich}
        <streetEnding> ::= {Street, St, Road, Rd, Avenue, Av}
        <placeName> ::= {Ipswich, London, Norwich, Bristol, Martlesham, Cam, Bath,
                        Gloucester, Glasgow, Cardiff}
}
```

These rules could be used to identify addresses such as

```
232 Norwich Rd Ipswich
42 Station Rd Norwich
12 a Main Street Martlesham
Cherry Cottage High St Bristol
```

```
and tag them as (for example)
      <domesticAddress>
       <buildingID>
            <number>232 </number>
            <streetName>Norwich</streetName>
            <streetEnding>Rd <lstreetEnding>
       </buildingID>
       <placeName>Ipswich </placeName>
      </domesticAddress>
  etc.
```

**Fuzzy Parsing - String Membership in a Grammar Fragment**

Fuzzy parsing is a matching process between a string and a grammar fragment in which we also allow the standard edit operations (insert, delete, substitute) on the string in order to make it conform more closely to the grammar fragment. The greater the number of editing operations, the lower the string's membership. This is (loosely) based on the Levenshtein distance for string matching and the CYK algorithm for parsing.

The number of edit operations, called the "cost", is represented by three numbers ($I$ $D$ $S$) where $I$, $D$ and $S$ are respectively the approximate number of Insertions, Deletions and Substitutions needed to make the string conform to the grammar fragment. The total cost is the sum of the three numbers.

In an alternative version, the set of edit operations may include other types of operation such as Transpositions (i.e. exchanging the respective positions of two or more adjacent or near-neighbouring symbols in the string) instead of or as well as one or more of the above edit operations, with the number T of Transpositions (or the number of any other such operation) being included in the sum in order to find the total cost.

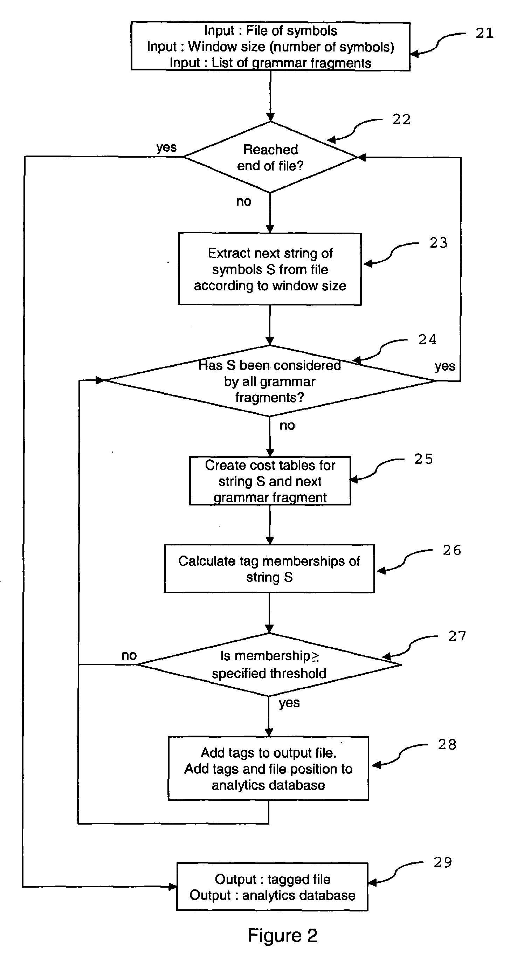

**Figure 1** shows a schematic of the components involved in the tagging process, which will assist in providing a brief overview of the process to be described with reference to Figure 2. In Figure 1, a fuzzy parser 10 is arranged to receive text from one or more documents 12 as its input. With reference to a store 14 containing a set of possible approximate grammar fragments, the fuzzy parser 10 uses the process to be described later in order to produce, as its output, one or more partially tagged documents 16 and a text analytics database 18 which contains the positions of tagged text, the types of tagged entities, and possible relations between tagged entities.

**Figure 2** shows the fuzzy parsing process, as follows:

At step 21, the fuzzy parser receives the document text as a file of symbols (i.e. textual units), which may include letters and/or numerals and/or other types of characters such as punctuation symbols for example. It also receives an indication of the "window size" (i.e. the number of symbols that are to be processed at a time as a "string" (i.e. a sequence of textual units). The window size is generally related to n, the maximum length of the grammar fragment, and is preferably 2n - although it is possible to create contrived cases in which the highest membership (equivalently, lowest cost) occurs outside a string of length 2n, such cases require large numbers of changes to the string and can generally be ignored.

The fuzzy parser is also in communication with the store of possible grammar fragments. Assuming that the end of the file has not yet been reached (step 22), a string of symbols S is extracted from the input file according to the window size (step 23). Assuming the current string S has not already been considered in relation to all grammar fragments (step 24), a cost table is created for string S and the next grammar fragment (step 25), and the tag membership of string S is calculated (step 26). If the tag membership is above or equal to a specified threshold (step 27), an appropriate tag is added to an output file, and the tag and its position in the file are added to the analytics database (step 28), then the process returns to step 24 and continues with the next grammar fragment. If the tag membership is below the threshold (step 27), the process simply returns to step 24 without updating the output file and continues with the next grammar fragment. Once the current string S has been considered in relation to all grammar fragments (step 24), the process returns to step 22 and extracts the next string (step23), unless the end of the file has been reached, in which case the process is completed at step 29 by providing, as outputs, the tagged file and the analytics database as updated.

In relation to step 23, in some preferred versions, the step of extracting the next string of symbols from the input file may involve extracting a string starting with the textual unit immediately after the last textual unit of the previous string. In other preferred versions, some overlap may be arranged between the next string and it predecessor. While this may lead to slightly decreased speed (which may be compensated for by use of increased computing power, for example), this will enable that further comparisons to be made between the textual units in the input document and those of the grammar fragments. If the maximum length of a grammar fragment is n and the window size is 2n, extracting strings such that the size of the overlap between successive strings is approximately equal to the maximum length of a grammar fragment (i.e. n) has been found to provide a good compromise between these two considerations.

In relation to steps 27 and 28, it will be understood that if the tag membership is above zero (or some other pre-determined threshold), the appropriate tag is added to the output file and appropriate information (i.e. the tag, the tag membership, the scope within the file) is stored in the analytics database. Where multiple tags are above the threshold, the output file and analytics database are updated in respect of each of the possibilities. For example, the string:

```
    tony blair witch project
 may be parsed in the following manner:

 <multipleParse>
        <alternativeParse seqNo="1">
                <person> tony blair </person> witch project
        </alternativeParse>
        <alternativeParse seqNo="2">
                tony <movie> blair witch project</movie>
        </alternativeParse>
        <alternativeParse seqNo="3">
                <movie>tony blair witch project</movie>
        </alternativeParse>
 </multipleParse>
```

This results in tags being allocated in three different ways: (1) in respect of the pair of words "tony blair" as a person (leaving the words "witch" and "project" yet-to-be tagged or left untagged); (2) in respect of the words "blair witch project" as a movie, leaving the word "tony" yet-to-be tagged or left un-tagged), and (3) in respect of the whole string, which is also a movie. All three of these are therefore kept as possibilities for the string.

For a string $S = s1^\wedge s2^\wedge s3 \ldots ^\wedge sm$ and a grammar rule with maximum length $n$, we use a $2n \times 2n$ table of costs. Storage requirements may be reduced as the maximum number of cells used is $n(2n+1)/2$, i.e. the upper right triangle including the diagonal cells. For clarity we illustrate the process in Example 2 below using the full $m \times m$ table. As can be seen from the example, and for the reasons explained above, it is convenient to use a moving window of size $2n$ on the string to be parsed when scanning through a document.

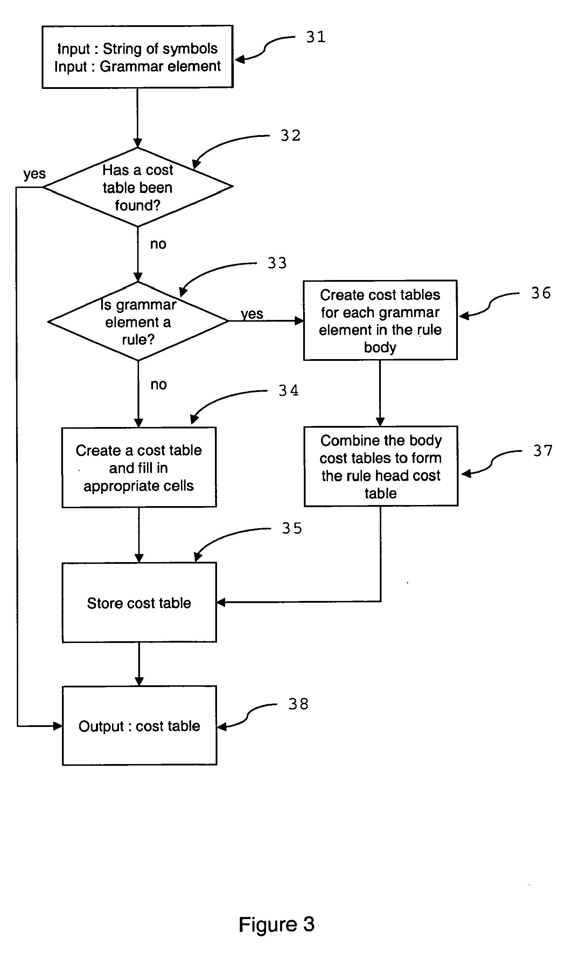

**Figure 3** shows the process of tagging strings of symbols and example 2 provides illustration. At step 31, the tagger receives the grammar element and the string to be tagged (or, more conveniently in practice, a reference to the string; this allows previously calculated cells of the cost table to be re-used). If a cost table has already been found for this combination of string and grammar fragment (step 32), it can be retrieved and returned immediately as an output (step 38). If not, a check is made (step 33) on whether the grammar fragment is a compound definition (rule) or atomic. If yes, repeated use of this process is made to calculate cost tables for each element in the rule body (step 36) and these are combined using the operations described below in the section below headed "String Membership in a Compound Grammar Element" (step 37). If no, storage is allocated for a cost table and the cell values are calculated (step 34) as described in the section below headed "String Membership in an Atomic Grammar Element".

Following step 34 or 37 (depending on the branch taken earlier), the cost table is stored for possible re-use (step 35) and the table is returned as the result of this process (step 38).

In Example 2, the table columns are labelled sequentially with $s1$, $s2$, ...and the same is done for the rows.

Each cell $i, j$ represents the cost of converting the substring $si \ldots sj$ to the grammar fragment. The cost table required for the tagging process is a portion of the full table as shown after cost table 1. Cost table 4 illustrates reuse of a stored cost table.

**String Membership in an Atomic Grammar Element**

For atomic (non-rule) grammar elements, the incremental cost may be calculated as follows.

If the grammar element is a symbol,

$$C_G[i, i] = \left(0, 0, \delta(s_i, t)\right)$$

$$C_G[i, i+1] = \left(0, 1, \min\left(\delta(s_i, t), \delta(s_{i+1}, t)\right)\right) \quad if \quad \min\left(\delta(s_i, t), \delta(s_{i+1}, t)\right) < 1$$

$$= \quad undefined \quad otherwise$$

where $\delta(s, t)$ measures the cost of replacing the symbol $t$ by $s$. By default

$$\delta(s,t)=1 \ \text{if} \ t{\neq}s$$
$$\delta(s,t)=0 \ \text{if} \ t{=}s$$

(although intermediate values $0 < \delta(s, t) \leq 1$ are also acceptable when $t{\neq}s$. One could, for example, use a normalised Levenshtein distance between the symbols or a value based on asymmetric word similarities. Such an intermediate matching operation must also be applied consistently to the costs of matching a symbol against another symbol and also when checking set membership. For simplicity we assume here that only identical symbols match)

If the grammar element is a fuzzy set

$$C_G[i,i]=\left(0,0,1-\mu_{TSj}(s_i)\right)$$
$$C_G[i,i+1]=\left(0,1,1-\max\left(\mu_{TSj}(s_i),\mu_{TSj}(s_{i+1})\right)\right) \quad if \quad \max\left(\mu_{TSj}(s_i),\mu_{TSj}(s_{i+1})\right)>0$$
$$= \quad undefined \quad otherwise$$

where $\mu_{TSj}(s_i)$ is the membership of element $s_i$ in fuzzy set $TS_j$
Note that *undefined* $> C$ for any cost $C$
All other cells are undefined.

## String Membership in a Compound Grammar Element

For a compound grammar element H ::= B1 B2 ... Bn

$$C_H = C_{B_1} \oplus C_{B_2} \oplus \ \ldots \ \oplus C_{B_n}$$

$$\left(C_{B_1} \oplus C_{B_2}\right)[i,j]= \min_{k=i\ldots j-1} \begin{pmatrix} C_{B_1}[i,j]+\left(minLength(B_2),0,0\right), \\ C_{B_1}[i,k]+C_{B_2}[k+1,j], \\ C_{B_2}[i,j]+\left(minLength(B_1),0,0\right) \end{pmatrix}$$

where we only need to consider cells that are not undefined.
If there is an optional element such as $B_{m+1}$ in $B_1 B_2 \ldots B_m [B_{m+1}] \ldots$

$$\left(C_{B_1 B_2 \ldots B_m [B_{m+1}]}\right)[i,j]= \min\left(C_{B_1 B_2 \ldots B_m}[i,j], C_{B_1 B_2 \ldots B_m B_{m+1}}[i,j]\right)$$

and where there are multiple definitions for a tag (e.g. *buildingID* below)

H1 = ...
H2 = ...    (where H1 and H2 are the same tag)

$$\text{then} \quad H[i,j]= \ min\left(H1[i,j], H2[i,j]\right)$$

**Example 2**

Consider

```
R = {
       <buildingID> ::== <number> <streetID>
       <buildingID> ::= <houseName> <streetID>
       <number> ::= {1, 2, 3, ... } (defined by a procedure)
       <anyWord> ::= {a, b, cottage, main, rd, ... } (defined by a procedure)
       <numberSuffix> ::= {a/1, b/1, c/1, d/1, e/0.8, f/0.6, g/0.2}
       <houseName> ::= <anyWord> <houseEnding>
       <houseEnding> ::= {cottage, house, building}
       <streetID> ::= <anyWord> [<anyWord>]< streetEnding>
       <streetEnding> ::= {street, st, road, rd} }
String = department x 93 b main street bs8 ·
```

We need to find incremental costs (blank = undefined) to tag this string with *<buildingID>*, the calculation is only shown for the first definition. The second definition also has to be calculated but gives lower membership so is omitted for clarity.

We start by finding the incremental cost tables for the lowest level elements in the grammar tree, namely

- number
- anyWord
- streetEnding

Cost Table 1

| number | department | x | 93 | b | main | street | bs8 |
|---|---|---|---|---|---|---|---|
| department | 0 0 1 | | | | | | |
| X | | 0 0 1 | 0 1 0 | | | | |
| 93 | | | 0 0 0 | 0 1 0 | | | |
| B | | | | 0 0 1 | | | |
| Main | | | | | 0 0 1 | | |
| Street | | | | | | 0 0 1 | |
| bs8 | | | | | | | 0 0 1 |
| Note that as the grammar element <number> has length 1 so that a window of size 2 on the string of symbols is used, and the actual cost table is | | | | | | | |

Cost Table 1a

| **number** | department | x |
|---|---|---|
| Department | 0 0 1 | |
| X | | 0 0 1 |

Moving the window along by one symbol would calculate :

Cost Table 1b

| number | x | 93 |
|---|---|---|
| X | 0 0 1 | 0 1 0 |
| 93 | | 0 0 0 |

where cells from Cost table 1 are shifted diagonally up, and only the last row and column need to be recalculated. For clarity, the whole tables are shown here.

Cost Table 2

| anyWord | department | x | 93 | b | main | street | bs8 |
|---|---|---|---|---|---|---|---|
| Department | 0 0 0 | 0 1 0 | | | | | |
| X | | 0 0 0 | 0 0 1 | | | | |
| 93 | | | 0 0 1 | 01 0 | | | |
| B | | | | 0 0 0 | 0 1 0 | | |
| Main | | | | | 0 0 0 | 0 1 0 | |
| Street | | | | | | 0 0 0 | 0 1 0 |
| Bs8 | | | | | | | 0 0 1 |

Cost Table 3

| streetEnding | department | x | 93 | b | main | street | bs8 |
|---|---|---|---|---|---|---|---|
| Department | 0 0 1 | | | | | | |
| X | | 0 0 1 | | | | | |
| 93 | | | 0 0 1 | | | | |
| B | | | | 0 0 1 | | | |
| Main | | | | | 0 0 1 | 0 1 0 | |
| Street | | | | | | 0 0 0 | 0 1 0 |
| bs8 | | | | | | | 0 0 1 |
| then cost tables 1 and 2 can be combined to give cost table 4 below: | | | | | | | |

Cost Table 4

| n⊕aW | department | x | 93 | b | main | street | bs8 |
|---|---|---|---|---|---|---|---|
| Department | 1 0 0 | 0 0 1 | 0 1 1 | | | | |
| X | | 1 0 0 | 1 1 0 | 0 1 0 | 0 2 0 | | |
| 93 | | | 1 0 0 | 0 0 0 | 0 1 0 | 0 2 0 | |

(continued)

| n⊕aW | department | x | 93 | b | main | street | bs8 |
|---|---|---|---|---|---|---|---|
| B | | | | 1 0 0 | 0 0 1 | 0 1 1 | |
| Main | | | | | 1 0 0 | 0 0 1 | 0 1 1 |
| Street | | | | | | 1 0 0 | 1 1 0 |
| bs8 | | | | | | | 1 0 1 |

This can be combined again with cost table 2 to give cost table 5:

Cost Table 5

| n⊕aW ⊕[aW] | department | x | 93 | b | main | street | bs8 |
|---|---|---|---|---|---|---|---|
| Department | 1 0 0 | 0 0 1 | 0 1 1 | 0 1 1 | | | |
| X | | 1 0 0 | 1 1 0 | 0 1 0 | 0 1 0 | 0 2 0 | |
| 93 | | | 1 0 0 | 0 0 0 | 0 0 0 | 0 1 0 | 0 2 0 |
| B | | | | 1 0 0 | 0 0 1 | 0 0 1 | 0 1 1 |
| Main | | | | | 1 0 0 | 0 0 1 | 0 1 1 |
| Street | | | | | | 1 0 0 | 1 1 0 |
| bs8 | | | | | | | 1 0 1 |

Finally combining with cost table 3 to give the overall result:

| n⊕aW ⊕[aW] ⊕stE | department | x | 93 | b | main | street | bs8 |
|---|---|---|---|---|---|---|---|
| Department | 2 0 0 | 1 0 1 | 0 0 2 | 1 2 0 | 1 2 0 | 0 2 0 | |
| X | | 2 0 0 | 1 0 1 | 1 1 0 | 1 1 0 | 0 1 0 | 0 2 0 |
| 93 | | | 2 0 0 | 1 0 0 | 1 0 0 | 0 0 0 | 0 1 0 |
| B | | | | 2 0 0 | 1 0 1 | 0 0 1 | 0 1 1 |
| Main | | | | | 2 0 0 | 1 0 0 | 1 1 0 |
| Street | | | | | | 2 0 0 | 1 0 1 |
| bs8 | | | | | | | 2 0 1 |

```
This correctly identifies the best parse (row labelled "93" column labelled "street")
      < buildingID >93 b main street </buildingID>
as well as near matches with partial membership - for example
<buildingID >93 b main street bs8 </buildingID> membership 0.8
(row labelled "93" column labelled "bs8" has cost (0 1 0),
      minLength(93 b main street bs8) = 5,
      1 - min (1, totalCost((0 1 0)) /5)) = 0.8)

Similarly
<buildingID >x 93 b main street</buildingID >
                                    membership 0.8
<buildingID >93 b main </buildingID >
                                    membership 0.66
<buildingID >b main street </buildingID >
                                    membership 0.66
```

```
<buildingID >93 b </buildingID >
                                            membership 0.5
<buildingID> main street </buildingID >
                                            membership 0.5
```

These are all stored in the text analytics database.

**Comparing Approximate Grammar Fragments**

It is often difficult to anticipate all possibilities when creating grammar fragments to tag sections of text in the manner described above. Hence it is possible that grammar fragments may be altered or extended by changing atomic and compound definitions. This process could be automatic (as part of a machine learning system) or manual.

In such cases, it is extremely valuable to compare the set of strings that can be tagged by an original grammar fragment and the modified grammar fragment. Clearly one could run two parallel tagging processes, as defined above, on a large set of strings and compare the outputs but this would be expensive in terms of computation. Preferred embodiments according to a second aspect now to be described relate to enabling an approximate comparison of the sets of strings tagged by two similar but not identical grammar fragments, based on estimating the number of edit operations needed to change an arbitrary string parsed by a first (source) grammar fragment into a string that would be parsed by a second (target) grammar fragment already existing in a store of grammar fragments.

We define a cost to be a 5-tuple *(I D S Rs Rt)* where *I, D* and *S* are respectively the approximate number of insertions, deletions and substitutions needed to match the grammar fragments, i.e. to convert a string parsed by the source grammar fragment into one that would satisfy the target grammar fragment. Because the source and target grammar fragments may be different lengths, *Rs* and *Rt* represent sequences of grammar elements remaining (respectively) in the source and target grammar fragments after the match; at least one of *Rs* and *Rt* is null in every valid cost.

Addition of costs is order dependent and is defined as

$$\left(I_1, D_1, S_1, Rs_1, Rt_1\right) + \left(I_2, D_2, S_2, Rs_2, Rt_2\right) = \left(I_1 + I_2, D_1 + D_2, S_1 + S_2, Rs_2, Rt_2\right)$$

A partially evaluated cost is a triple

$$peCost\left(\left(I, D, S, Rs, Rt\right)\right) = \left(I + minLength(Rs), D + minLength(Rt), S\right)$$

and the total cost is the sum of the three numbers in a partially evaluated cost

$$totalCost\left(\left(I, D, S, Rs, Rt\right)\right) = I + D + S + minLength(Rs) + minLength(Rt)$$

A total order is defined on costs by

$$C_1 \leq C_2 \; iff \; totalCost\left(C_1\right) \leq totalCost\left(C_2\right)$$

The cost of matching different grammar elements is defined as follows, where *S, T* are arbitrary grammar fragments, *s, t* are terminal symbols, *TS$_i$* are (fuzzy) sets of terminal symbols and *X* is any single grammar element

$$Cost_{GG}\left(null, T\right) = \left(0, 0, 0, null, T\right)$$

$$Cost_{GG}\left(S, null\right) = \left(0, 0, 0, S, null\right)$$

$$Cost_{GG}(TS_i, t) = \left(0, 0, 1 - \frac{\alpha}{|TS_i|_\alpha}, null, null\right) \quad where \quad \alpha = \mu_{TSi}(t)$$

$$Cost_{GG}(s, TS_j) = \left(0, 0, 1 - \mu_{TSj}(s), null, null\right)$$

$$Cost_{GG}(TS_i, TS_j) = \left(0, 0, 1 - E\left\{\left[\frac{|TS_i \cap TS_j|_\alpha}{|TS_i|_\alpha}\middle/\alpha\right]\right\}, null, null\right)$$

where $\alpha \in \{\mu TS_i(t_i)|t_i \in TS_i\} \cup \{\mu_{TSj}(t_j)|t_j \in TS_j\}$ and E(substitutionCost) is definedbelow

$$Cost_{GG}(s, t) = \left(0, 0, \delta(s,t), null, null\right)$$

$$Cost_{GG}([X], T) = Cost_{GG}(X, T)$$

$$Cost_{GG}(S, [X]) = Cost_{GG}(S, X)$$

$$Cost_{GG}(F_s, F_t) = \underset{F_s:=B_s \in R}{maxCost}\left(\underset{F_t:=B_t \in R}{minCost}(Cost_{GG}(B_s, B_t))\right)$$

$$Cost_{GG}(F_s, X) = \underset{F_s:=B_s \in R}{maxCost}(Cost_{GG}(B_s, X))$$

$$Cost_{GG}(X, F_t) = \underset{F_t:=B_t \in R}{minCost}(Cost_{GG}(X, B_t))$$

$$Cost_{GG}(X_1 {}^\wedge S, X_2 {}^\wedge T) = minCost\left(\begin{array}{l} Cost_{GG}(X_1, X_2) + Cost_{GG}(S, T), \\ Cost_{GG}(X_1, null) + Cost_{GG}(S, X_2 {}^\wedge T), \\ Cost_{GG}(null, X_2) + Cost_{GG}(X_1 {}^\wedge S, T) \end{array}\right)$$

where $\delta(s,t)$ and $\mu_{TSj}(s_i)$ were defined previously.

The cost of matching a fuzzy set against a terminal symbol or another fuzzy set is calculated as follows:

For a terminal symbol s in the source grammar fragment and a fuzzy set *TS* in the target grammar fragment, the substitution cost is simply the complement of the membership e.g.

$$Cost_{GG}(\text{ villa, \{house/1, cottage/1, villa/0.9, palace/0.1\}}) = (0, 0, 0.1, null, null)$$

$$Cost_{GG}(\text{ house, \{house/1, cottage/1, villa/0.9, palace/0.1\}}) = (0, 0, 0, null, null)$$

$$Cost_{GG}(\ apple,\ \{house/1,\ cottage/1,\ villa/0.9,\ palace/0.1\}\ ) = (0,\ 0,\ 1,\ null,\ null)$$

Where a fuzzy set *TS* is in the source grammar fragment is matched against a terminal symbol *t* in the target grammar fragment, the substitution cost is calculated from the membership of the element and the cardinality of the fuzzy set alpha cut at that membership. For example:

$$Cost_{GG}(\{house/1, cottage/1,\ villa/0.9,\ palace/0.1\ \}, villa)=\left(0,0,1-\frac{0.9}{3}, null, null\right)$$
$$= (0, 0, 0.7, null, null)$$

$$Cost_{GG}(\{house/1, cottage/1,\ villa/0.9,\ palace/0.1\ \}, house)=\left(0,0,1-\frac{1}{2}, null, null\right)$$
$$= (0, 0, 0.5, null, null)$$

$$Cost_{GG}(\{house/1, cottage/1,\ villa/0.9,\ palace/0.1\ \}, apple)=\left(0,0,1-\frac{0}{4}, null, null\right)$$
$$= (0, 0, 1, null, null)$$

For two fuzzy sets, the substitution cost is calculated as a fuzzy number from their degree of overlap at various alpha cuts e.g.

$$TS_s = \{a/1,\ b/1,\ c/0.4\}$$

$$TS_t = \{a/1,\ c/1,\ d/0.8\}$$

This requires the fuzzy number

$$\left\{ \frac{|TS_s \cap TS_t|_\alpha}{|TS_s|_\alpha} \Big/ \alpha \right\} where\ \alpha \in \{\mu_{TSs}(s)|s \in TS_s\} \cup \{\mu_{TSt}(t)|t \in TS_j\}$$

Here, $TS_s \cap TS_t$ = {a/1, c/0.4}
and the degree of overlap is {0.5/1, 0.666/0.4}
E(Cost) is the expected value of the corresponding least prejudiced distribution
MA = {½, 2/3} : 0.4, {½} : 0.6
LPD exp value = 0.5333
All cases above clearly satisfy the condition that at least one remainder is null, since this is explicitly stated (first 6 cases) or the final component of the addition is a grammar-grammar matching cost, cost$_{GG}$, which (because of the definition of cost addition) means the result must have at least one null remainder.
The more complicated cases require further breakdown - we define a grammar fragment as a sequence of grammar elements, e.g. all or part of the body of a grammar rule. Calculating the cost of converting a source fragment *GS[1...n]* to satisfy the target grammar fragment *GT[1...m]* proceeds as follows :

We use Rs[i, j] as shorthand for

$$SourceRemainder(C[i, j]) = SourceRemainder\ ((I, D, S, Rs, Rt)) = Rs$$

where

$$C[i, j] = (I, D, S, Rs, Rt)$$

and similarly for Rt[i, j]

Assume we have a dictionary *Dict* of cost tables, indexed by source grammar prefix *SPre,* fragment *GS*, target grammar prefix *TPre* and fragment *GT*, so that
*lookupDict(SPre, GS, TPre, GT)* returns the relevant table if it has been stored, or null if not NB *SPre + GS* and *TPre + GT* are paths from root to a node in the expanded grammar tree.

A cost table is an *n+1* by *m+1* array of costs, reflecting the transformation process from a source grammar fragment *GS[1...n]* to target grammar fragment *GT[1...m]*

The functions *bottomRight, rightCol, bottomRow* operate on a cost table returning respectively the bottom right cell, rightmost column and bottom row of the table.

**MatchFragments(*SPre, GS, TPre, GT)***

```
     S, T
[1]   if (GS == null)
[2]        return (0, 0, 0, (). GT)
[3]   else if (GT == null)
[4]        return (0, 0, 0, GS, ())
[5]   else
[6]        C = lookupDict(SPre, GS, TPre, GT)
[7]        if C is NULL
[8]        then
[9]          C = createTable(SPre, GS, TPre, GT)
[10]          store C in dictionary
[11]        endif
[12]  endif
[13]  return bottomRight(C)
```

**MatchAtoms(*Src, Targ)***
is specified by the first six lines of Cost$_{GG}$ above.

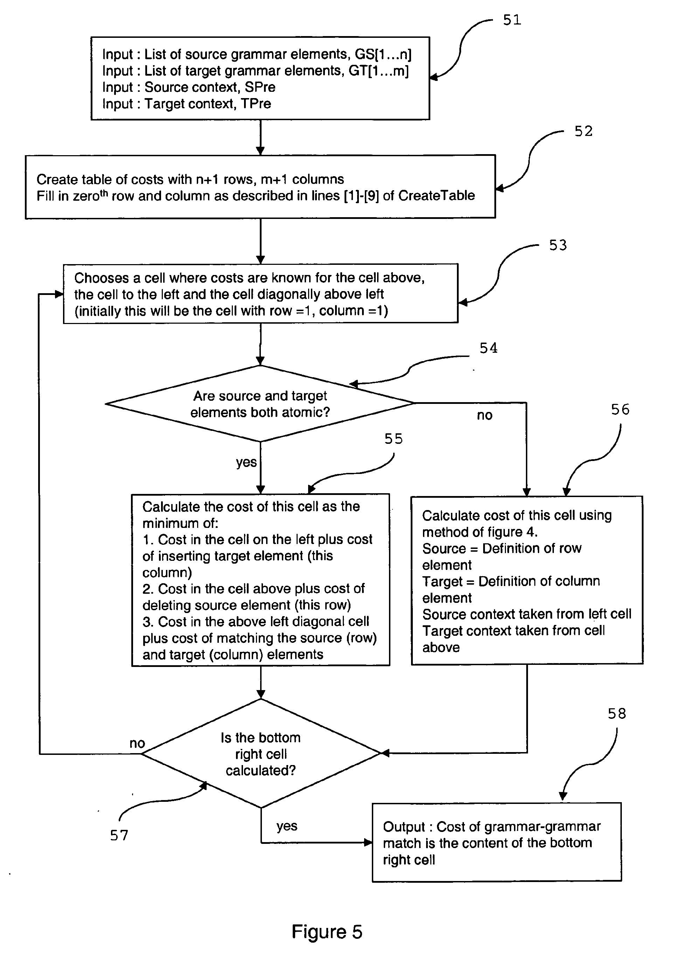

With reference to **Figure 5** (further discussion of which is included below), this shows the steps that are preferably taken in calculating the cost of transforming a source grammar fragment GS[1...n] to a target grammar fragment GT[1...m]. In steps 51 and 52 these are recorded in a table. Each row of the table corresponds to an element of the source grammar fragment, and each column to an element of the target grammar fragment.

In both cases, we also take into account the preceding grammar elements, respectively referred to as "SPre" for the source grammar fragment and "TPre" for the target grammar fragment.

Each cell within the table is specified by a row and column and represents the cost of transforming the source grammar fragment up to that row into the target grammar fragment up to that column. This is calculated in an incremental fashion, by examining the cost of transforming up to the immediately preceding row and column, finding the additional cost and minimising the total. The initial costs are easy to find - if there is a preceding grammar element (i.e. a non-null value for either SPre or TPre or both) then the cost is read from a previously calculated table. In the case of null values for either SPre or TPre or both, the cost is simply insertion of the target grammar elements (for row 0) or deletion of the source grammar elements (for column zero).

This step is illustrated below in the "Grammar Comparison Example", Step 1: Initialise table, and the procedure is itemised in steps 1-9 of the "CreateTable" procedure discussed below.

The cost to be stored in each remaining cell of the table can be calculated from its immediate neighbours on the left, above and diagonally above left. The cost of moving from the left cell to the current cell is simply the cost stored in the left cell plus the cost of inserting the target element corresponding to the current column.

The cost of moving from the cell above to the current cell is the cost stored in the cell above plus the cost of deleting the source element corresponding to the current row.

The cost of moving from the cell diagonally above left is the cost in that cell plus the cost of matching the source and target elements corresponding to the current row and column respectively. This may require creation of an additional table, but such a step is merely a repeat of the process described here.

The cost stored in the current cell is then the minimum of these three candidates.

Calculating the cost in this fashion can proceed by considering any cell in which the required three neighbours have been calculated. A simple approach is to start at the top left and move across each row cell by cell.

When the bottom right cell is reached, it is guaranteed to contain the minimum cost of transforming the source grammar fragment GS[1...n] to the target grammar fragment GT[1...m]

Steps 53 to 58 of Figure 5 correspond to steps 10-33 of the "CreateTable" procedure below. In Step 53, a cell is chosen where costs are known for the cell above, the cell to the left and the cell diagonally above left. Initially this will be the cell with row =1, column =1.

At Step 54, it is ascertained whether both the source and target elements are atomic. If so, the cost of this cell is calculated (in Step 55) to be the minimum of the following:

- the cost in the cell on the left plus the cost of inserting the target element (this column).
- the cost in the cell above plus the cost of deleting the source element (this row).
- the cost in the above left diagonal cell plus the cost of matching the source (row) and target (column) elements.

If not, the cost of this cell may be calculated (in Step 56) using a method such as that shown in Figure 4, using the following as the inputs:

Source = Definition of row element
Target = Definition of column element
Source context taken from left cell
Target context taken from cell above

If it is ascertained in Step 57 that the bottom right cell has not yet been calculated, another cell is chosen according to Step 53 and the procedure of Steps 54 then 55 or 56 is repeated in respect of this cell. If it is ascertained in Step 57 that the bottom right cell has now been calculated, the procedure ends at Step 58 by providing as an output the cost of the grammar-grammar match, which will be the content of the bottom right cell.

**CreateTable(*SPre, GS[1...n], TPre, GT[1...m])*)**

```
Let C[0…n, 0…m] be an n+1 by m+1 array of costs
[1]   C[0, 0]= bottomRight(lookupDict(SPre, TPre))


[2]   initTrgCost = bottomRow( lookupDict(SPre, TPre^GT)
[3]   for (j=1 to m)
[4]     C[0, j] =initTrgCost[j]
[5]   endfor


[6]   initSrcCost = rightCol(lookupDict(SPre^GS, TPre)
[7]   for (i=1 to n)
[8]     C[i, 0]= initSrcCost[i]
[9]   endfor


[10]  srcContext = SPre
[11]  for (i=1 to n)                                // source grammar fragment
[12]    trgContext = TPre
[13]    for (j=1 to m)                              // target grammar fragment
[14]      if (Gs[i] is atomic AND Gt[i] is atomic)
[15]          diagCost = C[i-1,j-1]
                        +(minLen(Rt[i-1,j-1]), minLen(Rs[i-1,j-1]), 0, null, null)
                        + Cost_GG(Gs[i] , Gt[j])
[16]          leftCost = C[i, j-1] + (0, maxLen(Rs[i,j-1]), 0, null, Rt[i,j-1]^Gt[j])
[17]          upCost = C[i-1, j] + (minLen(Rt[i-1,j]), 0, 0, Rs[i-1, j]^Gs[i], null)
[18]          C[i, j] = minCost(diagCost, leftCost, upCost)
[19]      else
[20]          C[i, j] = MAXCOST
[21]          for (srxExp in expansions(Gs[i])
[22]              for (trgExp in expansions(Gt[j])
[23]                  expCost = MatchFragments(srcContext, srxExp, trgContext, trgExp)
[24]                  if (C[i, j] > expCost )
[25]                      C[i, j] = expCost
[26]                  endif
[27]              endfor
[28]          endfor
[29]      endif
[30]      trgContext = trgContext^Gt[j]
[31]    endfor
[32]    srcContext = srcContext^Gs[i]
[33]  endfor
[34]  return C
```

C[n, m] is the cost of changing the source grammar fragment to satisfy the target grammar fragment

Overlap of GS with the grammar fragment GT = $1 - min ( 1, totalCost(C[n,m])/ minLength(GS))$

This is an estimate of the cost of changing a string parsed by the grammar fragment *GS* into one parsed by the grammar fragment *GT.*

To illustrate, see the simple example below. Note that the process is not necessarily symmetric, so the cost *GS* to *GT* may differ from the cost *GT* to *GS*

The same algorithm can be used to find the membership of a specific string in a grammar fragment: given a string *S* of length *m* and a grammar rule with body length *n* we follow the algorithms above, using a table with *n+1* columns labelled by the elements of the grammar fragment and *m+1* rows, labelled by the symbols in the string.

The membership of S in the grammar fragment GT is

$$\mu_{GT}(S) = 1 - \min\left(1, \frac{totalCost(C[n,m])}{length(S)}\right)$$

This is same as the result calculated using the method described in the section entitled "Fuzzy Parsing - String Membership in a Grammar Fragment".

**Figure 4** shows a schematic of the grammar-grammar matching process, given a source (GS) and target (GT) grammar fragment plus their respective contexts SPre and TPre. If either grammar fragment is null (this occurs when the end of a grammar definition is reached) then determination of the cost is straightforward (steps 42-45). If the table comparing GS to GT with contexts SPre and TPre has already been calculated (step 46) then it can be retrieved and the cost obtained from the bottom right cell (step 47). If not, a new table must be allocated, filled (as shown in Figure 5) and stored for possible re-use. The cost of this grammar-grammar match is the bottom right cell of the filled table (step 48). Finally the cost is returned as the result of this process (step 49).

**Grammar Comparison Example**

```
g1 ::=[a] [b] c
g2 ::= c [d] e
g3 ::= <g1> [d] [e]
g4 ::= a [b] <g2>
```

The set T of terminal elements is {a, b, c, d, e}

Source grammar fragment is g4, target grammar fragment is g3.

Notation in table cells is *I D S Rt Rs* and () is used to indicate null remainders

Step 1    Initialise table

| g4-g3 | null | g1 | [d] | [e] |
|---|---|---|---|---|
| null | 0 0 0 () () | 0 0 0 () (g1) | 0 0 0 () (g1 [d]) | 0 0 0 () (g1 [d] [e]) |
| a | 0 0 0 (a) () | | | |
| [b] | 0 0 0 (a [b]) () | | | |
| g2 | 0 0 0 (a [b] g2) () | | | |

Step 2    (recursively) calculate *a-g1* match (and cache the table for future use)

| a-g1 | context | [a] | [b] | c |
|---|---|---|---|---|
| context | 0 0 0 () () | 0 0 0 () ([a]) | 0 0 0 () ([a] [b]) | 0 0 0 0 () ([a] [b] c) |
| a | 0 0 0 (a) () | 0 0 0 () () | 0 0 0 () ([b]) | 0 0 0 () ([b] c) |

which enables us to fill in the first cell in the g3-g4 table from the bottom right cell

| g4-g3 | context | g1 | [d] | [e] |
|---|---|---|---|---|
| context | 0 0 0 () () | 0 0 0 () (g1) | 0 0 0 0 () (g1 [d]) | 0 0 0 0 () (g1 [d] [e]) |
| a | 0 0 0 (a) () | 0 0 0 () ([b] c) | | |
| [b] | 0 0 0 (a [b]) () | | | |
| g2 | 0 0 0 (a [b] g2) () | | | |

... Step 5 to complete the *b-g1* cell we need to re-use the table from step 2 (bottom line) to give the top line of the *b-g1* table

| [b] - g1 | context | [a] | [b] | C |
|---|---|---|---|---|
| context | 0 0 0 (a) () | 0 0 0 () () | 0 0 0 () ([b]) | 0 0 0 () ([b] c) |
| [b] | 0 0 0 (a [b]) () | 0 0 0 ([b]) () | 0 0 0 () () | 0 0 0 () (c) |

etc. giving the final table

| | null | g1 | [d] | [e] |
|---|---|---|---|---|
| Null | 0 0 0 () () | 0 0 0 () (g1) | 0 0 0 () (g1 [d]) | 0 0 0 () (g1 [d] [e]) |
| A | 0 0 0 (a) () | 0 0 0 () ([b] c) | 0 0 0 () ([b] c [d]) | 0 0 0 () ([b] c [d] [e]) |
| [b] | 0 0 0 (a [b]) () | 0 0 0 () (c) | 0 0 0 () (cd) | 0 0 0 () (c [d] [e]) |
| G2 | 0 0 0 (a [b] g2) () | 0 0 0 ([d] e) () | 0 0 0 (e) () | 0 0 0 () () |

The content of the bottom right cell (no edit operations, no remainders) shows that any string tagged (i.e. parsed) by g4 will also be tagged by g3. The overlap of g4 with g3 is 1.

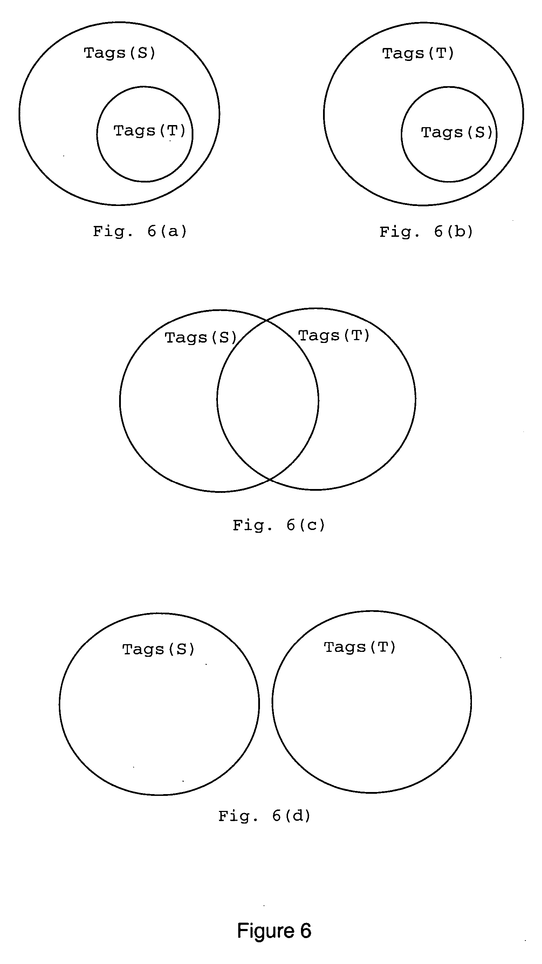

Possible overall results of performing an updating method according to the second aspect can be summarised in the following manner with reference to **Figure 6**.

In a first scenario, illustrated by Fig.6(a), it may be determined that an attempt to parse an arbitrary document using the source grammar fragment GS instead of the target grammar fragment GT would result in all of the tagging of sequences that would happen if the arbitrary document were parsed using the target grammar fragment GT and some further tagging of sequences. In this case it may be deemed appropriate to update the store of possible grammar fragments by replacing the target grammar fragment GT with the source grammar fragment GT in its original form.

In a second scenario, illustrated by Fig.6(b), it may be determined that an attempt to parse an arbitrary document using the source grammar fragment GS instead of the target grammar fragment GT would result in no tagging of sequences other than the tagging that would happen if the arbitrary document were parsed using the target grammar fragment GT. In this case it may be deemed appropriate not to replace the target grammar fragment GT at all. (This will also happen of course where the source grammar fragment GS and the target grammar fragment GT are identical, or so similar as to result in exactly the same tagging as each other.

In a third scenario, illustrated by Fig.6(c), it may be determined that attempts to parse an arbitrary document using the source grammar fragment GS and target grammar fragment GT would result in different sets of sequences being tagged, but with some overlap between the respective tagging. In this case it may be deemed appropriate to replace the target grammar fragment GT with a new grammar fragment in respect of which it is determined that attempts to parse an arbitrary document would result in (at least) all of the tagging that would be achieved using either the source grammar fragment GS or the target grammar fragment GT, with the new grammar fragment being determined in the manner set out above.

Finally, in a fourth scenario illustrated by Fig.6(d), it may be determined that there is no overlap (or insignificant overlap) between the respective tagging that would happen respectively using the source grammar fragment GS and the target grammar fragment GT, in which case it may be deemed appropriate to update the store of possible grammar fragments by adding the target grammar fragment GT without removing the source grammar fragment GT.

It will be understood that the above may be achieved without any requirement to re-process an entire set of documents and examine the tagged outputs for differences.

**Claims**

1. A computer-implemented method of analysing text in a document, said document comprising a plurality of textual units, said method comprising:

   receiving said document;
   partitioning the text in said document into sequences of textual units from the text in said document, each sequence having a plurality of textual units;
   for each of a plurality of sequences of textual units from said document:

   (i) comparing said sequence from said document with at least one of a plurality of pre-determined sequences stored in a sequence store;

(ii) in respect of each of said plurality of sequences from said sequence store, determining, according to a predetermined matching function, a similarity measure dependent on differences between said sequence from said document and said sequence from said sequence store, said similarity measure being dependent on how many unit operations are required in order to make the sequence from said document the same as the sequence from said sequence store, the unit operations being selected from a predetermined set of operations, and in the event that said similarity measure is indicative of a degree of similarity above a pre-determined threshold between said sequence from said document and said sequence from said sequence store, updating a results store with an identifier identifying the sequence from said document and with a tag indicative of said sequence from said sequence store;

providing an output document comprising, for each sequence of textual units from said document in respect of which at least one sequence from said sequence store has a similarity measure indicative of a degree of similarity above a pre-determined threshold, a tag indicative of said at least one sequence from said sequence store.

2. A method according to claim 1 wherein the step of partitioning the text comprises partitioning the text into sequences having a maximum length of approximately twice the maximum length of the sequences from the sequence store.

3. A method according to claim 1 or 2 wherein the step of partitioning the text comprises partitioning the text into sequences such that a subsequent sequence overlaps with its predecessor such as to include one or more textual units that were included with their predecessor sequence.

4. A method according to claim 3 wherein a subsequent sequence overlaps with its predecessor by an amount having a length approximately equal to the maximum length of the sequences from the sequence store.

5. A method according to any of the preceding claims wherein the predetermined set of operations comprises insertion of additional textual units into the sequence from said document, deletion of textual units from the sequence from said document, and substitution of one textual unit from the sequence from said document with another textual unit.

6. A method according to any of the preceding claims wherein the predetermined set of operations comprises transposition of textual units from the sequence from said document in addition to one or more of the operations listed in claim 5.

7. A method according to any of the preceding claims wherein step (ii) includes updating the results store with an indication of the similarity measure in respect of a sequence from said document and a sequence from said sequence store in the event that said similarity measure is indicative of a degree of similarity above a pre-determined threshold.

8. A method according to any of the preceding claims wherein the output document further comprises the similarity measures in respect of sequences from said document and sequences from said sequence store in respect of which the similarity measure is indicative of a degree of similarity above a pre-determined threshold.

9. A method according to any of the preceding claims wherein the step of providing an output document comprises, for each sequence of textual units from said document in respect of which a plurality of sequences from said sequence store have similarity measures indicative of degrees of similarity above a pre-determined threshold, tags indicative of said plurality of sequences from said sequence store.

10. A method according to any of the preceding claims wherein the document is an electronic document.

11. An apparatus arranged to perform the method of any of the preceding claims.

12. A computer-implemented method of updating a sequence store, said sequence store comprising a plurality of predetermined sequences of textual units being electronically stored for use in a computer-implemented process of analysing text in a document, said text analysis process comprising: comparing at least one sequence of textual units from said document with at least one of a plurality of pre-determined sequences stored in said sequence store; determining a similarity measure dependent on differences between said sequence from said document and said sequence from said sequence store, and in the event that said similarity measure is indicative of a degree of similarity above a pre-determined threshold between said sequence from said document and said sequence from said sequence store, updating a results store with an identifier identifying the sequence from said document and with a tag indicative of said sequence from said sequence store; said updating method comprising:

receiving an indication of an existing sequence in said sequence store, said existing sequence comprising a plurality of textual units;

receiving an indication of a candidate sequence, said candidate sequence comprising a plurality of textual units;

determining, by comparing individual textual units of the existing sequence with individual textual units of the candidate sequence, one or more unit operations required in order to convert the existing sequence into a potential replacement sequence which, when used in performing said text analysis process in respect of a document, would ensure that any sequence from said document that would result in a similarity measure indicative of a degree of similarity above a pre-determined threshold between said sequence from said document and said existing sequence would also result in a similarity measure indicative of a degree of similarity above a pre-determined threshold between said sequence from said document and said potential replacement sequence, the one or more unit operations being selected from a predetermined set of operations;

determining, in dependence on the one or more unit operations required in order to convert said existing sequence into said potential replacement sequence, a cost measure indicative of the degree of dissimilarity between said existing sequence and said potential replacement sequence; and

updating the sequence store by replacing said existing sequence with said potential replacement sequence in the event that said cost measure is indicative of a degree of dissimilarity below a predetermined threshold.

13. A method according to claim 12, said sequence store comprising a plurality of pre-determined sequences of textual units being electronically stored for use in a method according to any of claims 1 to 10.

14. A method according to claim 12 or 13 wherein the predetermined set of operations comprises insertion of additional textual units into the sequence, deletion of textual units from the sequence, and substitution of one textual unit from the sequence with another textual unit.

15. A method according to claim 12, 13 or 14 wherein said candidate sequence is derived from a sequence of textual units from a document in respect of which a previous process of analysing text in said document using a method such as that of any of claims 1 to 10 has led to similarity measures indicative of a degree of similarity below a pre-determined threshold between said sequence from said document and each of a plurality of sequences from said sequence store.

string of symbols (words, punctuation)

14 — Stored approximate grammar fragments

10 — Perform fuzzy parsing

12 — Documents

16 — Partially tagged documents

18 — Text analytics database

Contains : positions of tagged text,
types of tagged entities,
possible relations between tagged entities

Figure 1

Input : File of symbols
Input : Window size (number of symbols)
Input : List of grammar fragments — 21

Reached end of file? — 22

yes

no

Extract next string of symbols S from file according to window size — 23

Has S been considered by all grammar fragments? — 24

yes

no

Create cost tables for string S and next grammar fragment — 25

Calculate tag memberships of string S — 26

Is membership≥ specified threshold — 27

no

yes

Add tags to output file.
Add tags and file position to analytics database — 28

Output : tagged file
Output : analytics database — 29

Figure 2

Figure 3

41 → Input : Source grammar fragment, GS
Input : Target grammar fragment, GT
Input : Source context, SPre
Input : Target context, TPre

42 → Is GS null? — yes → 43 Cost = (0 0 0 () GT)

no

44 → Is GT null? — yes → 45 Cost = (0 0 0 GS ())

no

46 → Has this table been calculated? — yes → 47 Cost = bottom right cell of stored table

no

48 → Create the table
Store the table
Cost = bottom right cell

49 → Return the cost

Figure 4

51

> Input : List of source grammar elements, GS[1...n]
> Input : List of target grammar elements, GT[1...m]
> Input : Source context, SPre
> Input : Target context, TPre

52

> Create table of costs with n+1 rows, m+1 columns
> Fill in zeroth row and column as described in lines [1]-[9] of CreateTable

53

> Chooses a cell where costs are known for the cell above,
> the cell to the left and the cell diagonally above left
> (initially this will be the cell with row =1, column =1)

54

> Are source and target elements both atomic?

no

56

yes

55

> Calculate the cost of this cell as the minimum of:
> 1. Cost in the cell on the left plus cost of inserting target element (this column)
> 2. Cost in the cell above plus cost of deleting source element (this row)
> 3. Cost in the above left diagonal cell plus cost of matching the source (row) and target (column) elements

> Calculate cost of this cell using method of figure 4.
> Source = Definition of row element
> Target = Definition of column element
> Source context taken from left cell
> Target context taken from cell above

58

> Is the bottom right cell calculated?

no

57

yes

> Output : Cost of grammar-grammar match is the content of the bottom right cell

## Figure 5

Tags(S)

Tags(T)

Fig. 6(a)

Tags(T)

Tags(S)

Fig. 6(b)

Tags(S)      Tags(T)

Fig. 6(c)

Tags(S)          Tags(T)

Fig. 6(d)

Figure 6

**Europäisches Patentamt**
**European Patent Office**
**Office européen des brevets**

# EUROPEAN SEARCH REPORT

Application Number

EP 08 25 3188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 197 885 A (QAS LTD [GB]) 17 April 2002 (2002-04-17) * claim 1 * * paragraphs [0012], [0035], [0039], [0044] - [0046], [0049], [5012] * ----- | 1-11 | INV. G06F17/27 |
| X | DAVIS C.A., FONSECA F.T.: "Assessing the Certainty of Locations Produced by an Address Geocoding System" GEOINFORMATICA, [Online] vol. 11, no. 1, 2007, pages 103-129, XP002513995 Retrieved from the Internet: URL:http://www.personal.psu.edu/faculty/f/u/fuf1/publications/Davis_Fonseca_Geoinformatica_2007.pdf> [retrieved on 2009-02-03] * figure 4 * * page 16, line 1 - page 26, line 9 * ----- | 1-11 | |
| X | WO 2008/043582 A (IBM [US]; IBM FRANCE [FR]; EL-SHISHINY HISHAM [EG]; VOLKOV PAVEL [IE]) 17 April 2008 (2008-04-17) * line 31 - page 11, line 3 * * abstract * * figure 4 * ----- | 1,2,5,6, 9-11 | TECHNICAL FIELDS SEARCHED (IPC) G06F |
| X | WO 00/57291 A (JUSTSYSTEM PITTSBURGH RESEARCH [US]) 28 September 2000 (2000-09-28) * abstract; claims 1,5 * * page 4, lines 5,6 * ----- -/-- | 1,2,5,6, 9-11 | |

~~The present search report has been drawn up for all claims~~

| Place of search | Date of completion of the search | Examiner |
|---|---|---|
| Berlin | 6 February 2009 | Alt, Susanne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 169 562 A1**

Europäisches
Patentamt

European
Patent Office

Office européen
des brevets

## EUROPEAN SEARCH REPORT

Application Number

EP 08 25 3188

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VILARES M., RIBADAS F., VILARES J.: "Phrase similarity through Edit distance" DEXA 2004, LNCS 3180, [Online] 2004, pages 306-317, XP002513996 Retrieved from the Internet: URL:http://www.springerlink.com/content/eq wh688nvh52qdfr/> [retrieved on 2009-02-03] * abstract * Section 5 * pages 1,2,4 * * figures 3,6 * ----- | 1,5 | |
| A | CHAN S.: "An Edit distance Approach to Shallow Semantic Labeling" IDEAL 2007, LNCS 4881, [Online] 2007, pages 57-66, XP002513997 Retrieved from the Internet: URL:http://www.springerlink.com/content/p6 9320xj77v6255u/fulltext.pdf> [retrieved on 2009-02-03] * the whole document * ----- | 1,5,6, 9-11 | TECHNICAL FIELDS SEARCHED (IPC) |

The present search report has been drawn up for all claims

| Place of search | Date of completion of the search | Examiner |
|---|---|---|
| Berlin | 6 February 2009 | Alt, Susanne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

31

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-11

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the
requirements of unity of invention and relates to several inventions or groups of inventions, namely:

```
1. claims: 1-11

     Partial parsing method, based on calculation of string
     membership in a fuzzy grammar fragment
                      ---

2. claims: 12-15

     Update of fuzzy grammar fragments, based on comparison of
     fuzzy grammar fragments
                      ---
```

**ANNEX TO THE EUROPEAN SEARCH REPORT
ON EUROPEAN PATENT APPLICATION NO.**

EP 08 25 3188

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2009

| Patent document cited in search report | | Publication date | Patent family member(s) | | Publication date |
|---|---|---|---|---|---|
| EP 1197885 | A | 17-04-2002 | AT | 392666 T | 15-05-2008 |
| | | | GB | 2367917 A | 17-04-2002 |
| | | | US | 2008270432 A1 | 30-10-2008 |
| | | | US | 2002078024 A1 | 20-06-2002 |
| WO 2008043582 | A | 17-04-2008 | US | 2008091413 A1 | 17-04-2008 |
| WO 0057291 | A | 28-09-2000 | AU | 2492200 A | 09-10-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Aho ; Ullman.** Theory of Parsing, Translation and Compiling. Prentice Hall, 1972
- **P. Lyman ; H. R. Varian.** *How Much Information (2003),* 2003
- **E. Brill.** Transformation-Based Error-Driven Learning and Natural Language Processing: A Case Study in Part-of-Speech Tagging. *Computational Linguistics,* 1995, vol. 21, 543-566
- **H. van Halteren ; J. Zavrel ; W. Daelemans.** Improving Accuracy in Word Class Tagging through the Combination of Machine Learning Systems. *Computational Linguistics,* 2001, vol. 27, 199-230
- **C. D. Manning ; H. Schutze.** Foundations of Statistical Natural Language Processing. MIT Press, 1999
- **G. F. Luger ; W. A. Stubblefield.** Artificial Intelligence. Addison Wesley, 1998
- **W. I. Chang ; T. G. Marr.** Approximate String Matching and Local Similarity. *Lecture Notes in Computer Science,* 1994, 259
- **J. J. Astrain ; J. R. Gonzalez de Mendivil ; J. R. Garitagoitia.** Fuzzy automata with e-moves compute fuzzy measures between strings. *Fuzzy Sets and Systems,* 2006, vol. 157, 1550-1559
- **S. Nasser ; G. Vert ; M. Nicolescu ; A. Murray.** Multiple Sequence Alignment using Fuzzy Logic. *IEEE Symposium on Computational Intelligence in Bioinformatics and Computational Biology,* 2007, 304-311
- **R. Koppler.** A Systematic Approach to Fuzzy Parsing. *Software Practice and Experience,* 1997, vol. 27, 637-650